# EUROPÄISCHE PATENTSCHRIFT

(11) **EP 0 964 109 B1**
(45) Veröffentlichungstag und Bekanntmachung des Hinweises auf die Patenterteilung: **14.07.2004**
(21) Anmeldenummer: 99109905.2
(22) Anmeldetag: 20.05.1999
(51) Int. Cl.: C04B 28/02, C04B 28/10, C09K 3/10, E04B 1/68

(54) **Dichtungselement für Bauwerke**
Construction sealing element
Elément d'étanchéité pour constructions

(30) Priorität: 12.06.1998 DE 29810479 U
(43) Veröffentlichungstag der Anmeldung: 15.12.1999
(73) Patentinhaber: Pflieger, Adrian, Dipl.-Ing., 72135 Dettenhausen (DE)
(72) Erfinder: Pflieger, Adrian, Dipl.-Ing., 72135 Dettenhausen (DE)
(74) Vertreter: Möbus, Daniela, Dr.-Ing.

(56) Entgegenhaltungen:
- EP-A- 0 437 670
- DE-A- 4 217 183
- DE-C- 4 419 376
- US-A- 4 756 952
- US-A- 5 725 942

## Beschreibung

Die Erfindung betrifft ein Dichtungselement für Bauwerke nach dem Oberbegriff des Anspruchs 1.

Aus der DE 42 17 183 A1, der EP 0 437 670 A1, der US 4,756,952 und der DE 44 19 376 C1 sind Dichtungselemente bekannt, die eine wasserabweisende Ummantelung für den in Wasser quellbaren Kern aufweisen. Die Ummantelung kann eine durch Umwickeln auf den Kern aufgebrachte textile Ummantelung oder eine Beschichtung sein. Bei Kontakt mit alkalischen Medien wie Beton löst sich die Ummantelung auf.

Die Erfindung hat die Aufgabe, ein Dichtungselement der eingangs genannten Art dahin gehend zu verbessern, dass es einfacher in der Herstellung wird.

Die Erfindung löst die gestellte Aufgabe mittels eines Dichtungselements mit den Merkmalen des Anspruchs 1.

Das Kernmaterial kann ein wasseraufnehmendes Material enthalten, wie beispielsweise Glycerin bzw. einen Superabsorber, oder einen quellbaren Kunststoff, beispielsweise ein Acrylat bzw. ein Polyacrylat, oder Bentonit. Durch die wasseraufnehmende Eigenschaft des Kerns kann nach dem Trocknen der bisher auftretende Schwund der Dichtungselemente vermieden werden, der bisher zu Dichtigkeitsproblemen führte, wenn nach längerer Trockenzeit erneut Wasser auf die abzudichtende Stelle trifft. Die Stelle wurde erst nach erneutem Aufquellen des Dichtungselements wieder dicht.

Das Dichtungselement kann als Strang oder als Bahn ausgebildet sein, unabhängig davon, ob es zur Fugendichtung oder zur Flächenabdichtung verwendet wird.

Nachfolgend wird ein Ausführungsbeispiel eines erfindungsgemäß ausgebildeten Dichtungselements anhand der beiliegenden Zeichnung näher erläutert.

Im Einzelnen zeigen:
- Fig. 1a, 1b: zwei Schnittansichten eines als Strang ausgebildeten Dichtungselements;
- Fig. 2: eine Schnittansicht eines als Bahn ausgebildeten Dichtungselements.

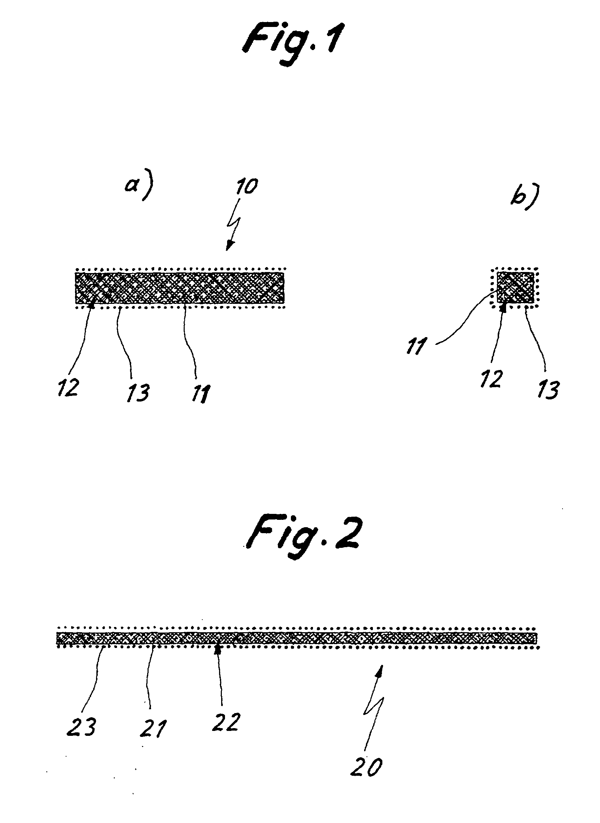

Fig. 1a, b zeigen ein Dichtungselement 10 im Längs- und Querschnitt, das als Dichtungsstrang ausgebildet ist. In dieser Ausführungsform eignet es sich besonders gut zur linienförmigen Abdichtung, wie z. B. zur Fugenabdichtung. Das Dichtungselement 10 besteht aus einem Kern 11, der aus einem in Wasser quellbaren Material 12 und aus wasserabweisendem Material, das sich in alikalischem Medium auflöst, gefertigt ist. Im Material 12 kann auch ein hydroskopisches Material wie Glycerin, enthalten sein, das nach dem Trocknen ein Schwinden des Dichtungselements 10 verhindert. Das Dichtungselement 10 ist hier von einer Ummantelung 13 umgeben. Sie besteht aus einem wasserabweisenden Material, das in Wasser unlöslich aber in alkalischen Medien lösbar ist. Das Dichtungselement 10 eignet sich insbesondere zum Abdichten von Fugen in Betonbauwerken. Die Ummantelung 13 löst sich durch den Kontakt mit dem Beton auf. Anschließend quillt der Kern 11 durch den Kontakt mit Feuchtigkeit.

Fig. 2 zeigt ein als Dichtungsbahn ausgebildetes Dichtungselement 20. Es wird zur Abdichtung von größeren Flächen verwendet. Das Dichtungselement 20 besteht aus einem in Wasser quellbaren Kern 21, der sowohl quellbares als auch wasserabweisendes, in einem alkalischen Medium lösbares Material 22 enthält. Außen kann das Dichtungselement 20 mit einer wasserabweisenden Ummantelung 23, beispielsweise einer Beschichtung, versehen sein.

## Patentansprüche

1. Dichtungselement (10, 20) für Bauwerke mit einem flexiblen, aus einem in Wasser quellbaren Material gefertigten Kern (11, 21), **dadurch gekennzeichnet, dass** der Kern (11, 21) mit einem wasserabweisenden Material versetzt ist, wobei das wasserabweisende Material unlöslich in Wasser, aber lösbar in einem alkalischen Medium ist.

2. Dichtungselement (10, 20) nach Anspruch 1, **dadurch gekennzeichnet, dass** das Material des Kerns (11, 21) ein wasseraufnehmendes Material (12, 22) enthält.

3. Dichtungselement (10, 20) nach Anspruch 2, **dadurch gekennzeichnet, dass** das wasseraufnehmende Material (12, 22) ein Glycerin oder ein Superabsorber ist.

4. Dichtungselement (10, 20) nach einem der Ansprüche 1 bis 3, **dadurch gekennzeichnet, dass** das Kernmaterial einen quellbaren Kunststoff, beispielsweise ein Acrylat oder ein Polyacrylat, enthält.

5. Dichtungselement (10, 20) nach einem der Ansprüche 1 bis 4, **dadurch gekennzeichnet, dass** das Kernmaterial Bentonit enthält.

6. Dichtungselement (10, 20) nach einem der Ansprüche 1 bis 5, **dadurch gekennzeichnet, dass** es als Strang (10) oder als Bahn (20) ausgebildet ist.

## Claims

1. Sealing element (10, 20) for construction works, having a flexible core (11, 21) made of a material that swells in water, **characterised in that** the core (11, 21) has a water repellent material mixed with it, the water repellent material being insoluble in water but soluble in an alkaline medium.

2. Sealing element (10, 20) according to claim 1, **characterised in that** the material of the core (11, 21) contains a water absorbent material (12, 22).

3. Sealing element (10, 20) according to claim 2, **characterised in that** the water absorbent material (12, 22) is a glycerine or a superabsorbent.

4. Sealing element (10, 20) according to one of claims 1 to 3, **characterised in that** the material of the core contains a plastics that can swell, for example an acrylate or a polyacrylate.

5. Sealing element (10, 20) according to one of claims 1 to 4, **characterised in that** the material of the core contains bentonite.

6. Sealing element (10, 20) according to one of claims 1 to 5, **characterised in that** it is formed as a strand (10) or web (20).

## Revendications

1. Élément d'étanchéité (10, 20) pour ouvrages de construction avec un noyau (11, 21) flexible, fabriqué dans un matériau gonflant dans l'eau, **caractérisé en ce qu'**au noyau (11, 21) est ajouté un matériau hydrophobe, le matériau hydrophobe étant insoluble dans l'eau, mais soluble dans un milieu alcalin.

2. Élément d'étanchéité (10, 20) selon la revendication 1, **caractérisé en ce que** le matériau du noyau (11,20) contient un matériau absorbant l'eau (12, 22).

3. Élément d'étanchéité (10, 20) selon la revendication 2, **caractérisé en ce que** le matériau absorbant l'eau (12, 22) est une glycérine ou un super-absorbeur.

4. Élément d'étanchéité (10, 20) selon l'une des revendications 1 à 3, **caractérisé en ce que** le matériau du noyau contient une matière plastique gonflable, par exemple un acrylate ou un polyacrylate.

5. Élément d'étanchéité (10, 20) selon l'une des revendications 1 à 4, **caractérisé en ce que** le matériau du noyau contient de la bentonite.

6. Élément d'étanchéité (10, 20) selon l'une des revendications 1 à 5, **caractérisé en ce qu'**il est réalisé sous la forme d'un cordon (10) ou d'une bande (20).
